# EUROPEAN PATENT SPECIFICATION

(11) **EP 3 301 289 B1**
(45) Date of publication and mention of the grant of the patent: **02.10.2019**
(21) Application number: 17194493.7
(22) Date of filing: 03.10.2017
(51) Int. Cl.: F02M 9/02, F02D 9/14

(54) **THROTTLE VALVE FOR AN INTERNAL COMBUSTION ENGINE**
DROSSELVENTIL FÜR EINEN VERBRENNUNGSMOTOR
PAPILLON DES GAZ POUR MOTEUR À COMBUSTION INTERNE

(30) Priority: 03.10.2016 IT 201600098911
(43) Date of publication of application: 04.04.2018
(73) Proprietor: Magneti Marelli S.p.A., 20011 Corbetta (MI) (IT)
(72) Inventor: SAMENGO, Domenico, 00167 Roma (IT); MUSOLESI, Stefano, 40122 Bologna (IT); BELLATO, Nazario, 40131 Bologna (IT)
(74) Representative: Maccagnan, Matteo

(56) References cited:
- FR-A- 950 064
- FR-A1- 2 831 211
- US-A- 2 029 666
- US-A1- 2001 023 685

## Description

### TECHNICAL FIELD

The present invention relates to a throttle valve for an internal combustion engine.

The present invention can be advantageously applied to a throttle valve for a small internal combustion engine (normally single cylinder) and destined to be installed in a motorcycle, to which the following description shall expressly refer, although without loss of generality.

### STATE OF THE ART

In a single cylinder internal combustion engine for motorcycles there is normally provided a throttle valve, which regulates the flow of air fed to the cylinder.

A typical throttle valve currently on the market for a single cylinder internal combustion engine for motorcycles has a valve body provided with a tubular feeding duct through which the air sucked in by the internal combustion engine flows; on the inside of the feeding duct there is housed a moving shutter that can move between an open position and a closed position of the feeding duct. The movement of the shutter is directly controlled by a Bowden cable, which is connected to an accelerator throttle control and by a closing spring, which pushes the shutter towards the closed position; in other words, the action of the Bowden cable as a result of the movement of the accelerator throttle control moves the shutter against the elastic force generated by the closing spring and compressing the closing spring.

Generally, there is provided a pressure sensor, which is arranged downstream of the shutter to measure the intake pressure, i.e. the pressure of the air that is sucked inside the cylinder. A control unit estimates the flow of air sucked in as a function of the intake pressure and therefore as a function of the flow of air sucked in establishes the amount of fuel to be injected to optimise the internal combustion of the cylinder.

The patent application IT102015000020520 describes a throttle valve for a small internal combustion engine (normally single cylinder) and destined to be installed in a motorcycle; the throttle valve comprises: a valve body; a feeding duct obtained in the valve body and through which the air sucked in by the internal combustion engine flows; an operating duct, which is obtained in the valve body, is arranged perpendicular to the feeding duct and intersects the feeding duct; a shutter, which has a cylindrical shape, is designed to be mechanically connected to an accelerator control, engages the feeding duct, and moves, translating linearly, on the inside of the operating duct between an open position and a closed position of the feeding duct; and a closing spring, which presses against a base of the shutter, so as to push the shutter towards the closed position of the feeding duct. The position of the shutter on the inside of the operating duct is controlled through a Bowden cable having one end fixed to the shutter and an opposite end connected to an accelerator throttle control.

The patent applications JPH06137241A and FR2831211A1 also describe a throttle valve similar to the throttle valve described in the patent application IT102015000020520, that is, provided with a shutter of cylindrical shape, which slides inside an operating duct that intersects a feeding duct.

### DESCRIPTION OF THE INVENTION

The object of the present invention is to produce a throttle valve for an internal combustion engine that is easy and inexpensive to manufacture.

According to the present invention, there is produced a throttle valve for an internal combustion engine, according to what is set forth in the appended claims.

### BRIEF DESCRIPTION OF THE DRAWINGS

The present invention shall now be described with reference to the accompanying drawings, which illustrate an example of nonlimiting embodiment thereof, wherein:
- Fig. 1 is a schematic view of a motorcycle driven by an internal combustion engine provided with a throttle valve produced according to the present invention;
- Fig. 2 is a perspective view of the throttle valve of Fig. 1;
- Fig. 3 is a perspective and exploded view of the throttle valve of Fig. 2;
- Fig. 4 is a longitudinal sectional view with parts removed for clarity of the throttle valve of Fig. 2;

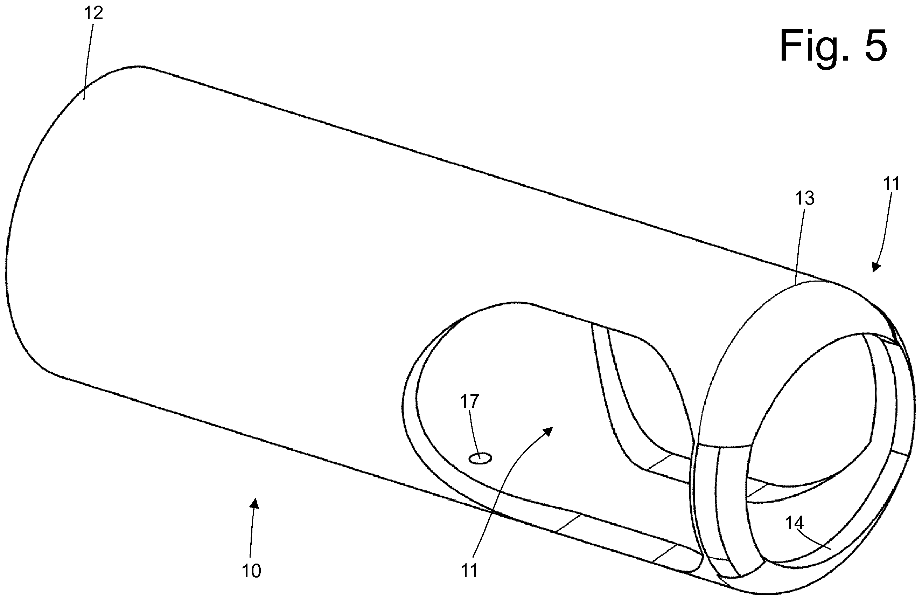

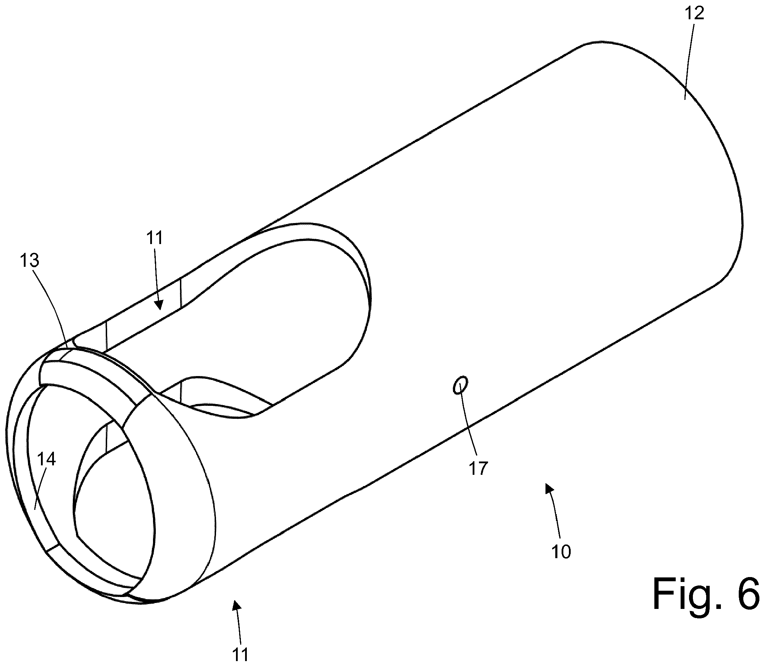

- Figs. 5 and 6 are two perspective views of a tubular metal insert of the throttle valve of Fig. 2;
- Figs. 7-10 are four cross sections of the tubular metal insert of Figs. 5 and 6 according to four different variants of embodiment; and
- Fig. 11 is a cross section of an operating duct of the throttle valve of Fig. 2 produced around the tubular metal insert of Fig. 10.

### PREFERRED EMBODIMENTS OF THE INVENTION

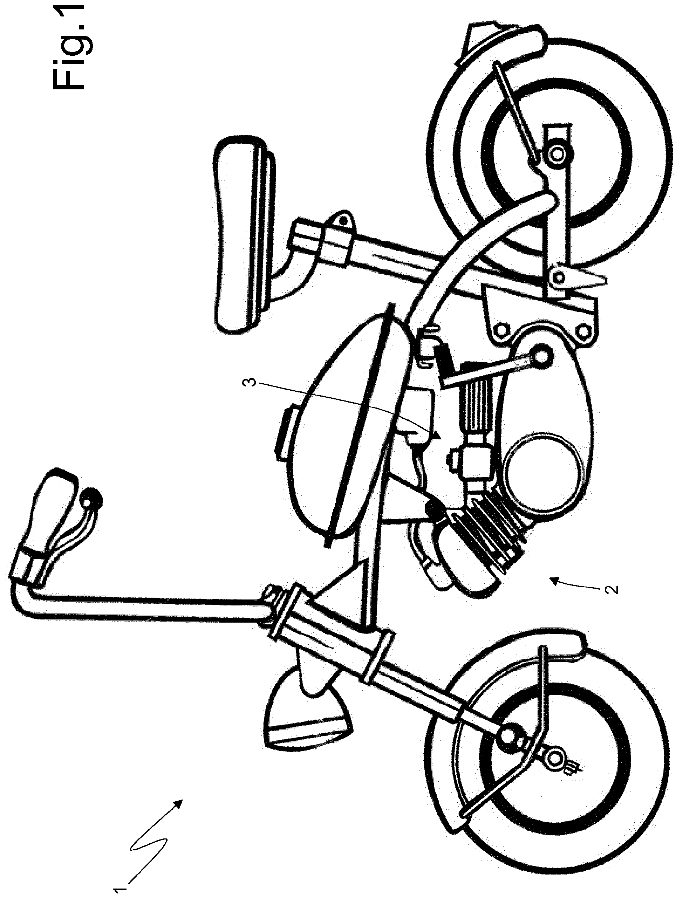

In Fig. 1, the numeral 1 indicates as a whole a motorcycle driven by a small single cylinder internal combustion engine 2 (naturally, it could also have a larger number of cylinders according to alternative embodiments, not illustrated) provided with a mechanically controlled throttle valve 3 to regulate the flow of intake air.

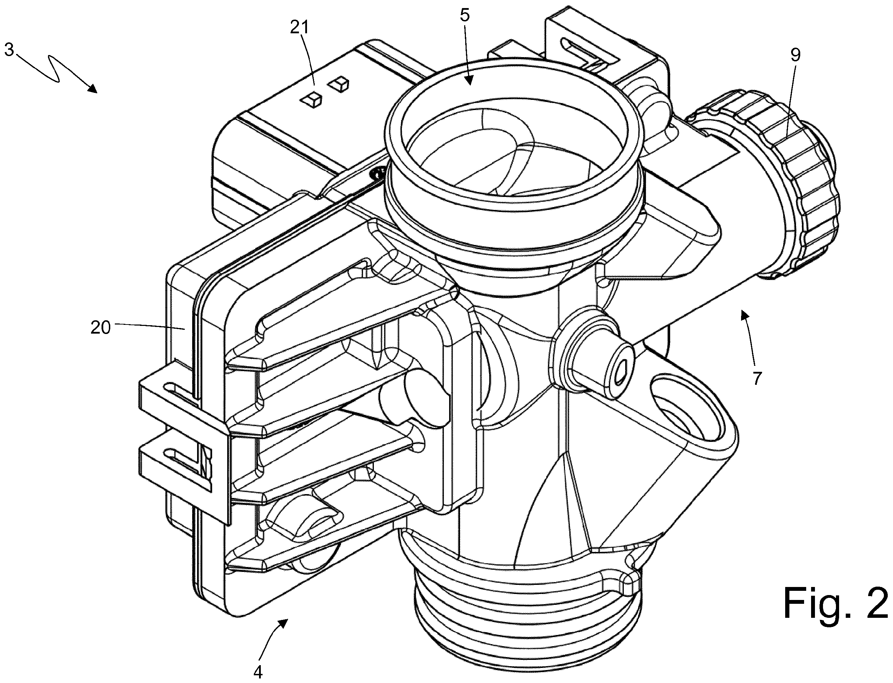

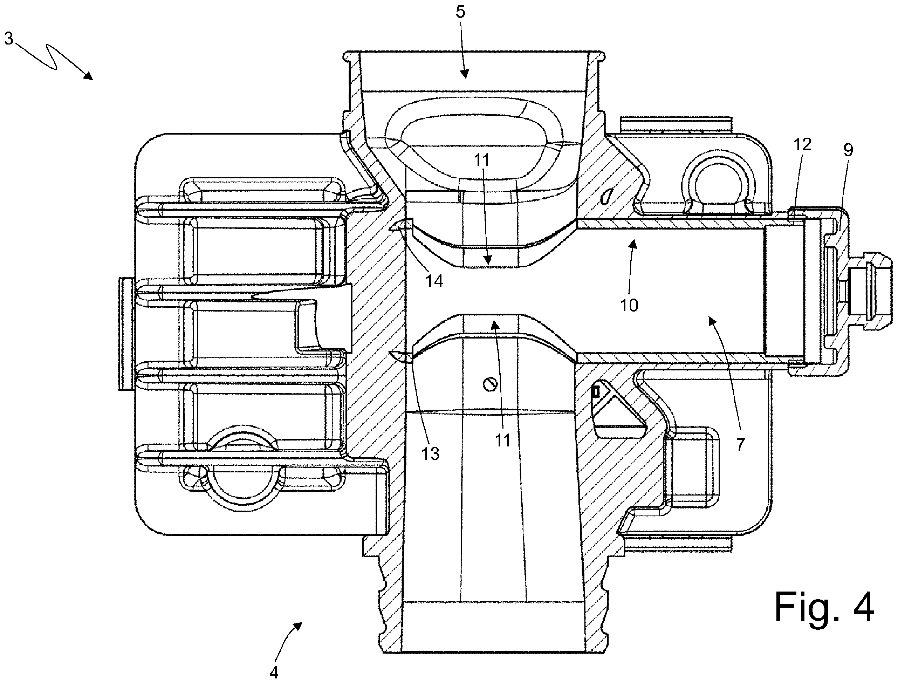

According to what is illustrated in Figs. 2, 3 and 4, the throttle valve 3 comprises a valve body 4 in which a tubular feeding duct 5 with a circular section is obtained, through which the air sucked in by the internal combustion engine 2 flows. The throttle valve 3 comprises a shutter 6 (made of a metal material), which has a cylindrical shape, engages the feeding duct 5, and moves, translating linearly (that is, along a rectilinear trajectory) between an open position and a closed position of the feeding duct 5. In particular, in the valve body 4 there is obtained an operating duct 7 with a circular section (better illustrated in Fig. 4), which is arranged perpendicular to the feeding duct 5, intersects the feeding duct 5, and houses the shutter 6 in a sliding manner (that is, the shutter 6 slides along the operating duct 7 between the open position and a closed position of the feeding duct 5).

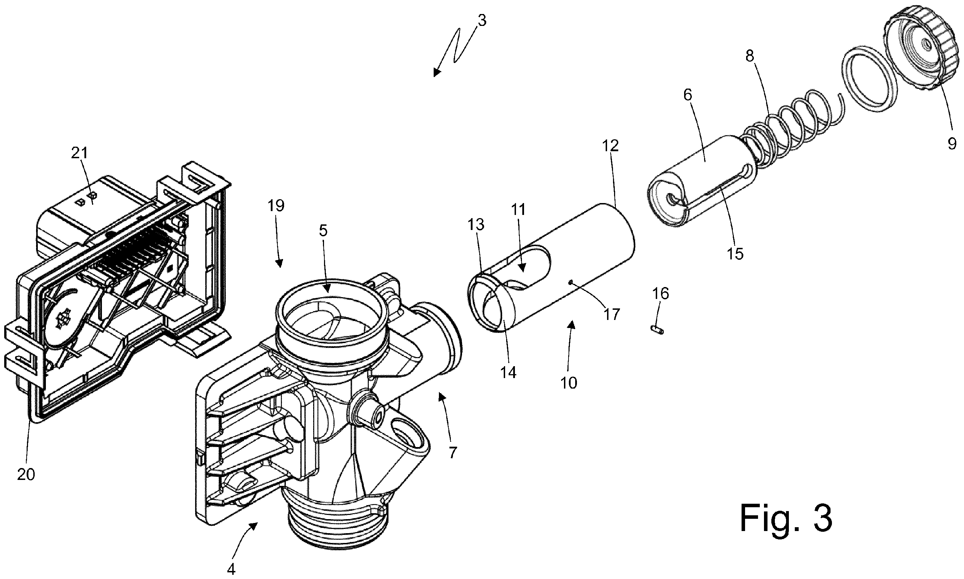

On the inside of the operating duct 7 there is arranged a closing spring 8, which presses against a base of the shutter 6, so as to push the shutter 6 towards the closed position of the feeding duct 5. An end of the operating duct 7 opposite the feeding duct 5 is closed by a plug 9, which is screwed so as to compress the closing spring 8 against the shutter 6 and has, at the centre, a through hole, which is provided with a sealing gasket and enables the passage of a Bowden cable (not illustrated); the plug 9 is screwed around the operating duct 7 and between the plug 9 and the operating duct 7 there is interposed a sealing ring (visible in Fig. 3). An end of the Bowden cable is fixed to the shutter 6 (therefore, the shutter 6 is adapted to be mechanically connected to an accelerator throttle control) while the opposite end of the Bowden cable is connected to an accelerator throttle control; by rotating the accelerator throttle control the Bowden cable is pulled to determine sliding of the shutter 6 towards the open position of the feeding duct 5 compressing the closing spring 8.

The valve body 4 is made of a moulded plastic material (for example, a thermoplastic material filled with glass fibres could be used to increase the mechanical strength); on the inside of the valve body 4 there is arranged a tubular metal insert 10 (for example, made of aluminium, of anodised aluminium, or of stainless steel), which is arranged in the area of the operating duct 7 and covers the operating duct 7 so that the shutter 6 slides inside the tubular insert 10 and in direct contact with the tubular insert 10. The tubular insert 10 has, at the centre, a cylindrical cavity, which defines the operating duct 7 and inside which the shutter 6 slides; moreover, the tubular insert 10 has two through holes 11 (illustrated in Fig. 4), which are aligned with and opposite one another and are arranged in the area of the feeding duct 5 so as to ensure the continuity of the feeding duct 5.

According to a preferred embodiment, the valve body 4 made of a plastic material is overmoulded (by means of injection moulding) around the tubular insert 10; in other words, the tubular insert 10 is arranged on the inside of a closed mould into which the plastic material making up the valve body 4 is subsequently injected.

According to a preferred, but not binding, embodiment, an outer end 12 of the tubular insert 10 projects from the valve body 4 (that is, it is not covered by the plastic material making up the valve body 4 and is therefore exposed) and is threaded so as to receive the plug 9; in other words, the plug 9 is screwed around the outer end 12 of the tubular insert 10, which projects from the valve body 4 and is threaded.

According to a preferred, but not binding, embodiment, the tubular insert 10 includes a striker ring 14, that is monolithic with the tubular insert 10 (i.e. it is manufactured as one single piece together with the tubular insert 10), is arranged in the area of an inner end 13 of the tubular insert 10 opposite the outer end 12 and partially closes the cylindrical cavity, i.e., it makes up a base wall that partially closes the cylindrical cavity. In use, the shutter 6, in its limit position, strikes the striker ring 14 which makes up a maximum limit stop, which cannot be exceeded, for the sliding movement of the shutter 6; in this way, the shutter 6 can never come into contact with the plastic material making up the valve body 4, and which closes the inside of the cavity of the tubular insert 10, as it is stopped immediately before by the striker ring 14. For example, the striker ring 14 could be produced by a mechanical deformation (cambering) of the inner end 13 of the tubular insert 10.

According to a possible embodiment, not illustrated, on the outer surface of the tubular insert 10 there can be obtained ribs oriented crosswise, which are buried in the plastic material making up the valve body 4 and have the function of preventing an axial withdrawal of the tubular insert 10 from the valve body 4 (that is, a longitudinal sliding movement of the tubular insert 10 with respect to the valve body 4).

According to a preferred, but not binding, embodiment, an anti-rotation device is provided, which prevents the shutter 6 from rotating around its central axis on the inside of the operating duct 7; in other words, the anti-rotation device enables the shutter 6 to slide freely along the operating duct 7 but prevents any kind of rotation of the shutter 6. The anti-rotation device comprises a slit 15 (visible in Fig. 3) which is arranged longitudinally and is obtained in the area of a side wall of the shutter 6, and a pin 16 (visible in Fig. 3), which is inserted into a through hole 17 obtained through the side surface of the tubular insert 10, radially projects into the operating duct 7 and engages the slit 15. According to a possible embodiment, the pin 16 of the anti-rotation device is driven into the through hole 17, which is obtained in the tubular insert 10 and leads into the operating duct 7.

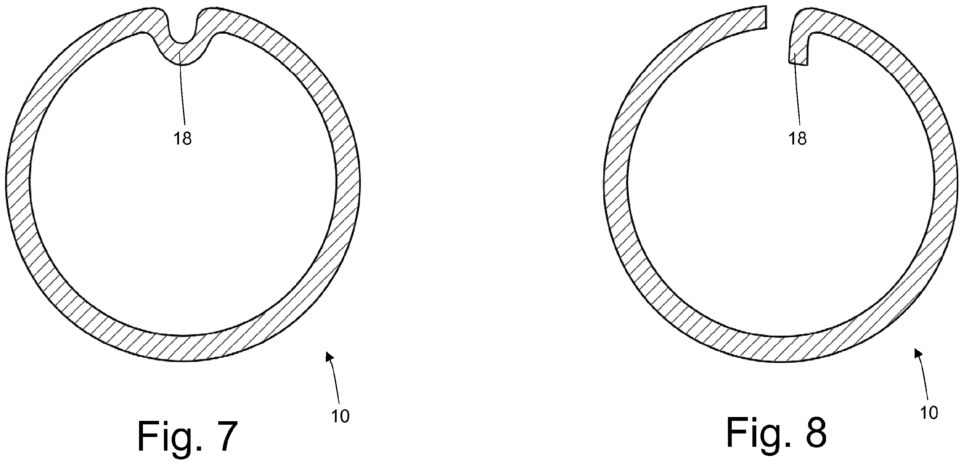

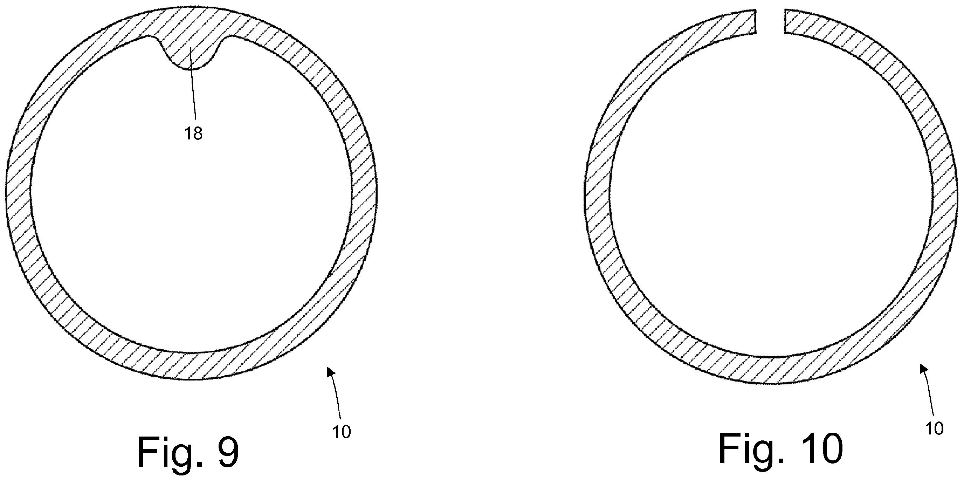

According to the alternative embodiment illustrated in Figs. 7, 8 and 9, the pin 16 of the anti-rotation device is replaced by a longitudinal rib 18 (axial) which is obtained in the inner surface of the tubular insert 10 and engages (in place of the pin 16) the slit 15 obtained in the area of a side wall of the shutter 6. According to what is illustrated in Figs. 7 and 8, the rib 18 is obtained by deforming the side wall of the tubular insert 10; this deformation can maintain the integrity of the side wall of the tubular insert 10 (embodiment illustrated in Fig. 7) or can entail a local shearing of the side wall of the tubular insert 10 (embodiment illustrated in Fig. 8). According to what is illustrated in Fig. 9, the rib 18 is obtained by locally thickening the side wall of the tubular insert 10, that is, by locally producing the side wall of the tubular insert 10 with increased thickness.

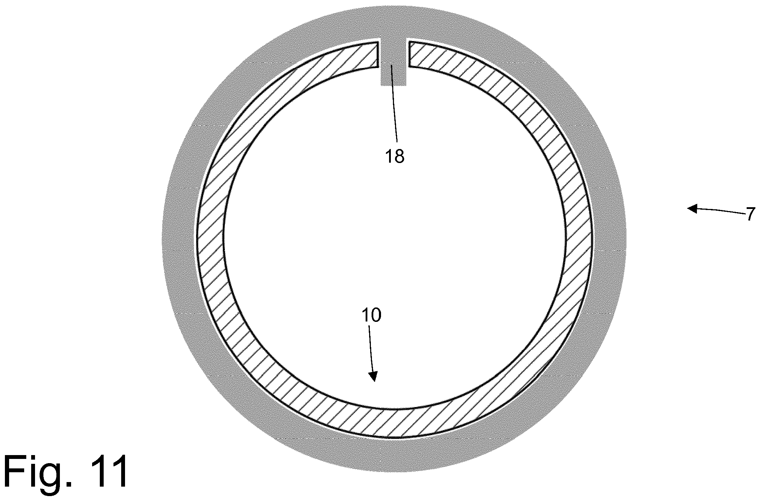

According to the alternative embodiment illustrated in Figs. 10 and 11, the pin 16 of the anti-rotation device is replaced by a longitudinal rib 18 (axial), which is made of the plastic material that makes up the valve body 4; in other words, in this embodiment the tubular insert 10 has a longitudinal through opening (illustrated in both Figs. 10 and 11) through which part of the plastic material that makes up the valve body 4 penetrates into the tubular insert 10 (during the injection moulding process) to produce the longitudinal rib 18. The longitudinal rib 18 made of plastic material projects towards the inside of the tubular insert 10 and engages (in place of the pin 16) the slit 15 obtained in the area of the side wall of the shutter 6.

According to what is illustrated in Fig. 3, the valve body 4 comprises a chamber 19, which has a rectangular shape, is arranged at the side of the feeding duct 5 and parallel to the feeding duct 5 and is closed by a removable cover 20. The throttle valve 3 comprises an electronic control unit, which supervises operation of the internal combustion engine 2 guiding, among other things, fuel injection into the cylinder and ignition of the mixture in the cylinder (generating the ignition impulse of the spark plug). The control unit comprises a printed circuit board (also known as PCB), which supports and interconnects the various electronic components of the control unit. The cover 20 supports an electrical connector 21, which provides the electrical connection of the control unit to the other components of the internal combustion engine 2 (for example, the fuel injector, the spark plug and the stroke sensor of the drive shaft) and of the motorcycle (for example the battery).

The cover 20 is made of a moulded plastic material (typically, the same plastic material used to produce the valve body 4); according to a possible embodiment, the cover 20 is welded (for example by means of a laser) to the valve body 4 so as to seal the chamber 19 once the control unit has been inserted into the chamber 19. According to an alternative embodiment, the cover 20 is not provided, the electrical connector 21 is obtained directly in the valve body 4, and the chamber 19, after being inserted into the control unit, is completely filled with a thermoplastic resin that entirely covers the control unit; in other words, the control unit arranged in the chamber 19 is completely buried in a thermoplastic resin that fills the chamber 19.

According to a preferred embodiment, the throttle valve 3 comprises a magnetic stroke sensor of a "contactless" type, which is coupled to the shutter 6 and is designed to detect the linear position of the shutter 6 along the operating duct 7. The stroke sensor comprises a permanent magnet, which is rigidly mounted on the shutter 6 and a reader (for example, operating according to the Hall effect), which is supported by the printed circuit of the control unit (that is, is integrated in the control unit) and is arranged in the area of the permanent magnet (that is, is arranged facing and close to the permanent magnet). Preferably (but not necessarily), the permanent magnet of the stroke sensor is buried in the shutter 6 and is overmoulded together with the shutter 6.

The permanent magnet of the stroke sensor is arranged on the inside of the operating duct 7, as the permanent magnet is coupled to the shutter 6, which slides along the operating duct 7; instead, the reader of the stroke sensor is arranged on the outside of the feeding duct 5 and of the operating duct 7 and close to the permanent magnet. Consequently, between the magnet and the reader of the stroke sensor there is interposed a side wall of the operating duct and/or of the feeding duct and a side wall of the tubular insert 10; this condition does not prevent correct reading of the position of the magnet (and therefore of the shutter 6) as the valve body 4 is made of a plastic material and the tubular insert 10 is normally made of a non-magnetic material. If the tubular insert 10 were made of a magnetic material (for example steel) then, it would be necessary to provide the tubular insert 10 with a through opening, in the area of the reader of the stroke sensor.

It is important to observe that the presence of the anti-rotation device always ensures correct reading of the position of the shutter 6, as it always ensures perfect alignment between the permanent magnet of the stroke sensor and the corresponding reader of the stroke sensor; in fact, if the shutter 6 were to rotate on the inside of the operating duct 7 the magnet of the stroke sensor would move away from the reader of the stroke sensor and the quality of the position reading would deteriorate.

The throttle valve 3 described above has numerous advantages.

Firstly, the whole valve body 4 is made of a moulded plastic material, which has a decidedly lower production cost (both in terms of the cost of the material, and in terms of processing cost) with respect to metal material; moreover, the use of moulded plastic material to produce the valve body 4 also enables a noteworthy reduction in the weight of the valve body 4.

Further, the operating duct 7 is covered (lined) by the tubular insert 10 made of metal material; in this way, in use rubbing occurs only between metal surfaces (the shutter 6 and the tubular insert 10 inside which the shutter 6 slides), allowing high assembly precision, greater stability in time, and reduced wear (in this regard it is important to observe how the plastic material used to make the valve body 4 could be particularly abrasive due to the presence of the glass fibres with which the plastic material is filled).

Finally, a same mould used for the valve body 4 can be easily adapted to receive tubular inserts 10 of different diameter (naturally, to be coupled with corresponding shutters 6 of different diameter), so as to be able to produce, simply and with very limited tooling costs, a family of throttle valves 3 suitable for internal combustion engines 2 of different sizes (and therefore different powers).

## Claims

1. A throttle valve (3) for an internal combustion engine (2); the throttle valve (3) comprises:
a valve body (4);
a feeding duct (5), which is obtained in the valve body (4) and through which the air sucked in by the internal combustion engine (2) flows;
an operating duct (7), which is obtained in the valve body (4), is arranged perpendicular to the feeding duct (5), and intersects the feeding duct (5);
a shutter (6), which has a cylindrical shape, is designed to be mechanically connected to an accelerator control, engages the feeding duct (5), and moves, translating linearly, on the inside of the operating duct (7) between an open position and a closed position of the feeding duct (5); and
a closing spring (8), which presses against a base of the shutter (6), so as to push the shutter (6) towards the closed position of the feeding duct (5);
the throttle valve (3) is **characterized in that:**
the valve body (4) is made of a moulded plastic material; and there is a tubular insert (10) provided, which is made of a metal material, is arranged on the inside of the valve body (4) in the area of the operating duct (7), and covers the operating duct (7) so that the shutter (6) slides on the inside of the tubular insert (10) in direct contact with the tubular insert (10).

2. A throttle valve (3) according to claim 1, wherein:
the tubular insert (10) has, at the centre, a cylindrical cavity, which defines the operating duct (7) and inside which the shutter (6) slides; and
the tubular insert (10) has two through holes (11), which are aligned with and opposite one another and are arranged in the area of the feeding duct (5) so as to ensure the continuity of the feeding duct (5).

3. A throttle valve (3) according to claim 1 or 2, wherein the valve body (4) made of a plastic material is overmoulded around the tubular insert (10).

4. A throttle valve (3) according to claim 1, 2 or 3, wherein an outer end of the operating duct (7) opposite the feeding duct (5) is closed by a plug (9), which is screwed so as to compress the closing spring (8) against the shutter (6) and has, at the centre, a through hole, which is provided with a sealing gasket and enables the passage of a Bowden cable.

5. A throttle valve (3) according to claim 4, wherein an outer end (12) of the tubular insert (10) projects from the valve body (4) and is threaded so as to receive the plug (9), which is screwed around the outer end (12) of the tubular insert (10) .

6. A throttle valve (3) according to any of the claims from 1 to 5, wherein the tubular insert (10) includes a striker ring (14), which is manufactured as one single piece together with the tubular insert (10), is arranged in the area of an inner end (13) of the tubular insert (10), and partially closes the cylindrical cavity so as to make up a maximum limit stop, which cannot be exceeded, for the sliding movement of the shutter (6).

7. A throttle valve (3) according to any of the claims from 1 to 6, wherein on the outer surface of the tubular insert (10) there is at least one rib oriented crosswise, which is buried in the plastic material making up the valve body (4).

8. A throttle valve (3) according to any of the claims from 1 to 7 and comprising a magnetic stroke sensor, which is designed to detect the linear position of the shutter (6) along the operating duct (7) and comprises a permanent magnet, which is rigidly mounted on the shutter (6), and a reader, which is arranged on the outside of the feeding duct (5) and of the operating duct (7) and close to the permanent magnet.

9. A throttle valve (3) according to any of the claims from 1 to 8 and comprising an anti-rotation device, which prevents the shutter (6) from rotating around its central axis on the inside of the operating duct (7).

10. A throttle valve (3) according to claim 9, wherein the anti-rotation device comprises a slit (15), which is arranged longitudinally and is obtained in the area of a side wall of the shutter (6), and an engaging element (16; 18), which radially projects into the operating duct (7) and engages the slit (15).

11. A throttle valve (3) according to claim 10, wherein the engaging element (16; 18) consists of a pin (16) arranged in a through hole (17), which is obtained in the side wall of the tubular insert (10).

12. A throttle valve (3) according to claim 10, wherein the engaging element (16; 18) consists of a longitudinal rib (18), which is integral with the tubular insert (10) and projects towards the inside of the tubular insert (10).

13. A throttle valve (3) according to claim 12, wherein the longitudinal rib (18) is obtained in the inner surface of the tubular insert (10).

14. A throttle valve (3) according to claim 13, wherein the rib (18) is obtained by deforming the side wall of the tubular insert (10).

15. A throttle valve (3) according to claim 12, wherein:
the tubular insert (10) has a longitudinal through opening; and
the longitudinal rib (18) is made of part of the plastic material that makes up the valve body (4) and penetrates into the tubular insert (10) through the longitudinal through opening.

## Patentansprüche

1. Drosselventil (3) für eine Verbrennungskraftmaschine (2);
wobei das Drosselventil (3) umfasst:
einen Ventilkörper (4);
einen Zuführkanal (5), der im Ventilkörper (4) ausgebildet ist und durch den die von der Verbrennungskraftmaschine (2) angesaugte Luft strömt;
ein Arbeitskanal (7), der im Ventilkörper (4) ausgebildet ist, senkrecht zum Zuführkanal (5) angeordnet ist und den Zuführkanal (5) kreuzt;
einen Verschluss (6), der eine zylindrische Form aufweist und dazu ausgelegt ist, mit einer Beschleunigersteuerung mechanisch verbunden zu sein, in den Zuführkanal (5) eingreift und sich an der Innenseite des Arbeitskanals (7) zwischen einer offenen Position und einer geschlossenen Position des Zuführkanals (5) linear verschiebt; und
eine Schließfeder (8), die gegen eine Basis des Verschlusses (6) drückt, um den Verschluss (6) in Richtung zu der geschlossenen Position des Zuführkanals (5) zu drücken;
wobei das Drosselventil (3) **dadurch gekennzeichnet, dass**:
der Ventilkörper (4) aus einem geformten Kunststoffmaterial gefertigt ist; und
ein rohrförmiger Einsatz (10) vorgesehen ist, der aus einem metallischen Werkstoff gefertigt ist, an der Innenseite des Ventilkörpers (4) im Bereich des Arbeitskanals (7) angeordnet ist und den Arbeitskanal (7) abdeckt, so dass der Verschluss (6) in direktem Kontakt mit dem rohrförmigen Einsatz (10) auf der Innenseite des rohrförmigen Einsatzes (10) gleitet.

2. Drosselventil (3) nach Anspruch 1, wobei:
der Rohreinsatz (10) in der Mitte einen zylindrischen Hohlraum aufweist, der den Arbeitskanal (7) definiert und in dem der Verschluss (6) gleitet; und
der Rohreinsatz (10) zwei Durchgangslöcher (11) aufweist, die aufeinander ausgerichtet und einander gegenüberliegend und im Bereich des Zuführkanals (5) so angeordnet sind, dass sie die Kontinuität des Zuführkanals (5) gewährleisten.

3. Drosselventil (3) nach Anspruch 1 oder 2, wobei der aus einem Kunststoffmaterial gefertigte Ventilkörper (4) um den Rohreinsatz (10) herum gespritzt ist.

4. Drosselventil (3) nach Anspruch 1, 2 oder 3, wobei ein dem Zuführkanal (5) gegenüberliegendes äußeres Ende des Arbeitskanals (7) durch einen Stopfen (9) verschlossen ist, der so verschraubt ist, dass er die Schließfeder (8) gegen den Verschluss (6) zusammendrückt, und in der Mitte ein Durchgangsloch aufweist, das mit einer Dichtung versehen ist und den Durchtritt eines Bowdenzugs ermöglicht.

5. Drosselventil (3) nach Anspruch 4, wobei ein äußeres Ende (12) des Rohreinsatzes (10) aus dem Ventilkörper (4) hervorsteht und mit einem Gewinde versehen ist, um den Stopfen (9) aufzunehmen, der auf das äußere Ende (12) des Rohreinsatzes (10) geschraubt ist.

6. Drosselventil (3) nach einem der Ansprüche von 1 bis 5, wobei der Rohreinsatz (10) einen Schlagring (14) aufweist, der zusammen mit dem Rohreinsatz (10) einteilig gefertigt ist, im Bereich eines inneren Endes (13) des Rohreinsatzes (10) angeordnet ist und den zylindrischen Hohlraum teilweise verschließt, um für die Gleitbewegung des Verschlusses (6) einen Maximalgrenzen-Anschlag zu bilden, der nicht überschritten werden kann.

7. Drosselventil (3) nach einem der Ansprüche von 1 bis 6, wobei auf der Außenfläche des Rohreinsatzes (10) wenigstens eine quer ausgerichtete Rippe vorhanden ist, die in dem den Ventilkörper (4) bildenden Kunststoff eingebettet ist.

8. Drosselventil (3) nach einem der Ansprüche von 1 bis 7, ferner einen magnetischen Hubsensor umfassend, der dazu ausgelegt ist, die Linearposition des Verschlusses (6) entlang des Arbeitskanals (7) zu erfassen, und einen starr am Verschluss (6) montierten Permanentmagneten und eine Lesevorrichtung umfasst, die an der Außenseite des Zuführkanals (5) und des Arbeitskanals (7) und in der Nähe des Permanentmagneten angeordnet ist.

9. Drosselventil (3) nach einem der Ansprüche von 1 bis 8, ferner eine Drehsicherung umfassend, die den Verschluss (6) daran hindert, sich um seine Mittelachse im Inneren des Arbeitskanals (7) zu drehen.

10. Drosselventil (3) nach Anspruch 9, wobei die Drehsicherung einen Schlitz (15), der in Längsrichtung angeordnet ist und im Bereich einer Seitenwand des Verschlusses (6) vorgesehen ist, sowie ein Eingriffselement (16; 18) umfasst, das radial in den Arbeitskanal (7) ragt und in den Schlitz (15) eingreift.

11. Drosselventil (3) nach Anspruch 10, wobei das Eingriffselement (16; 18) einen Stift (16) umfasst, der in einem Durchgangsloch (17) angeordnet ist, das in der Seitenwand des Rohreinsatzes (10) vorgesehen ist.

12. Drosselventil (3) nach Anspruch 10, wobei das Eingriffselement (16; 18) eine Längsrippe (18) umfasst, die integral mit dem Rohreinsatz (10) ausgebildet ist und in Richtung zum Inneren des Rohreinsatzes (10) hervorsteht.

13. Drosselventil (3) nach Anspruch 12, wobei die Längsrippe (18) auf der Innenfläche des Rohreinsatzes (10) vorgesehen ist.

14. Drosselventil (3) nach Anspruch 13, wobei die Rippe (18) durch Verformung der Seitenwand des Rohreinsatzes (10) erhalten worden ist.

15. Drosselventil (3) nach Anspruch 12, wobei:
der Rohreinsatz (10) eine Längsdurchgangsöffnung aufweist; und
die Längsrippe (18) aus einem Teil des Kunststoffmaterials gefertigt ist, das den Ventilkörper (4) bildet, und durch die Längsdurchgangsöffnung in den Rohreinsatz (10) vordringt.

## Revendications

1. Papillon des gaz (3) pour un moteur à combustion interne (2) ; le papillon des gaz (3) comprend :
un corps de papillon (4) ;
un conduit d'alimentation (5), qui est constitué dans le corps de papillon (4) et au travers duquel l'air qui est aspiré par le moteur à combustion interne (2) s'écoule ;
un conduit de fonctionnement (7), qui est constitué dans le corps de papillon (4), qui est agencé perpendiculairement au conduit d'alimentation (5) et qui intersecte le conduit d'alimentation (5) ;
un obturateur (6), qui présente une forme cylindrique, conçu pour être connecté mécaniquement à une commande d'accélérateur, qui engage le conduit d'alimentation (5), et qui se déplace, linéairement en translation, sur l'intérieur du conduit de fonctionnement (7) entre une position ouverte et une position fermée du conduit d'alimentation (5) ; et
un ressort de fermeture (8), qui exerce une pression contre une base de l'obturateur (6), de manière à ce qu'il pousse l'obturateur (6) en direction de la position fermée du conduit d'alimentation (5) ;
le papillon des gaz (3) est **caractérisé en ce que** :
le corps de papillon (4) est réalisé en un matériau de matière plastique moulée ; et
un insert tubulaire (10) est prévu, lequel est réalisé en un matériau métallique, est agencé sur l'intérieur du corps de papillon (4) dans la zone du conduit de fonctionnement (7) et recouvre le conduit de fonctionnement (7) de sorte que l'obturateur (6) coulisse sur l'intérieur de l'insert tubulaire (10) en contact direct avec l'insert tubulaire (10).

2. Papillon des gaz (3) selon la revendication 1, dans lequel :
l'insert tubulaire (10) comporte, au niveau du centre, une cavité cylindrique qui définit le conduit de fonctionnement (7) et à l'intérieur de laquelle l'obturateur (6) coulisse ; et
l'insert tubulaire (10) comporte deux trous traversants (11) qui sont alignés l'un par rapport à l'autre, qui sont opposés l'un par rapport à l'autre et qui sont agencés dans la zone du conduit d'alimentation (5) de sorte à assurer la continuité du conduit d'alimentation (5).

3. Papillon des gaz (3) selon la revendication 1 ou 2, dans lequel le corps de papillon (4) qui est réalisé en un matériau de matière plastique est surmoulé autour de l'insert tubulaire (10).

4. Papillon des gaz (3) selon la revendication 1, 2 ou 3, dans lequel une extrémité externe du conduit de fonctionnement (7) opposée au conduit d'alimentation (5) est fermée par un bouchon (9), lequel est vissé de manière à comprimer le ressort de fermeture (8) contre l'obturateur (6) et comporte, au niveau du centre, un trou traversant muni d'une garniture d'étanchéité et permettant le passage d'un câble de Bowden.

5. Papillon des gaz (3) selon la revendication 4, dans lequel une extrémité externe (12) de l'insert tubulaire (10) fait saillie depuis le corps de papillon (4) et est filetée de sorte à recevoir le bouchon (9), lequel est vissé autour de l'extrémité externe (12) de l'insert tubulaire (10).

6. Papillon des gaz (3) selon l'une quelconque des revendications 1 à 5, dans lequel l'insert tubulaire (10) inclut une bague de percuteur (14), laquelle est fabriquée en tant qu'une seule pièce en association avec l'insert tubulaire (10), est agencée dans la zone d'une extrémité interne (13) de l'insert tubulaire (10) et ferme partiellement la cavité cylindrique de sorte à constituer une butée d'arrêt de limite maximum, qui ne peut pas être dépassée, pour le mouvement coulissant de l'obturateur (6).

7. Papillon des gaz (3) selon l'une quelconque des revendications 1 à 6, dans lequel, sur la surface externe de l'insert tubulaire (10), il y a une nervure orientée de façon transversale, laquelle est intégrée à l'intérieur de la matière plastique qui forme le corps de papillon (4).

8. Papillon des gaz (3) selon l'une quelconque des revendications 1 à 7 et comprenant un capteur de course magnétique, lequel est conçu pour détecter la position linéaire de l'obturateur (6) le long du conduit de fonctionnement (7) et comprend un aimant permanent, lequel est monté de façon rigide sur l'obturateur (6), et un lecteur, lequel est agencé sur l'extérieur du conduit d'alimentation (5) et du conduit de fonctionnement (7) et est à proximité de l'aimant permanent.

9. Papillon des gaz (3) selon l'une quelconque des revendications 1 à 8 et comprenant un dispositif anti-rotation, lequel empêche que l'obturateur (6) ne tourne autour de son axe central sur l'intérieur du conduit de fonctionnement (7).

10. Papillon des gaz (3) selon la revendication 9, dans lequel le dispositif anti-rotation comprend une fente (15), laquelle est agencée longitudinalement et est constituée dans la zone d'une paroi latérale de l'obturateur (6), et un élément d'engagement (16 ; 18), lequel fait saillie radialement à l'intérieur du conduit de fonctionnement (7) et engage la fente (15).

11. Papillon des gaz (3) selon la revendication 10, dans lequel l'élément d'engagement (16 ; 18) est constitué par une broche (16) qui est agencée à l'intérieur d'un trou traversant (17), lequel est ménagé dans la paroi latérale de l'insert tubulaire (10) .

12. Papillon des gaz (3) selon la revendication 10, dans lequel l'élément d'engagement (16 ; 18) est constitué par une nervure longitudinale (18), laquelle est d'un seul tenant avec l'insert tubulaire (10) et fait saillie en direction de l'intérieur de l'insert tubulaire (10).

13. Papillon des gaz (3) selon la revendication 12, dans lequel la nervure longitudinale (18) est constituée dans la surface interne de l'insert tubulaire (10).

14. Papillon des gaz (3) selon la revendication 13, dans lequel la nervure (18) est constituée en déformant la paroi latérale de l'insert tubulaire (10).

15. Papillon des gaz (3) selon la revendication 12, dans lequel :
l'insert tubulaire (10) comporte une ouverture traversante longitudinale ; et
la nervure longitudinale (18) est constituée par une partie de la matière plastique qui constitue le corps de papillon (4) et pénètre à l'intérieur de l'insert tubulaire (10) au travers de l'ouverture traversante longitudinale.
